# DEMANDE DE BREVET EUROPEEN

(11) **EP 1 715 370 A1**
(43) Date de publication de la demande: **25.10.2006**
(21) Numéro de dépôt: 06002095.5
(22) Date de dépôt: 02.02.2006
(51) Int. Cl.: G02C 11/02

(54) **Lunettes à monture transformable et élément de transformation amovible associé**

(30) Priorité: 22.04.2005 FR 0504268
(71) Demandeur: Tand'm S.a.r.l., 39800 Poligny (FR)
(72) Inventeur: Charmoille, Patricia, 25000 Besancon (FR)
(74) Mandataire: Bentz, Jean-Paul

(57) **Abrégé**

Lunettes (1A) constituées d'une façade optique ou solaire (9, 10), reliée à deux branches latérales de soutien (3, 4), par l'intermédiaire de deux tenons correspondants (7A), lunettes sur lesquelles est susceptible d'être rapporté, de manière amovible, au moins un élément de transformation (12A) par l'intermédiaire de moyens de fixation complémentaires (15A, 16A), caractérisées en ce que ces moyens sont constitués d'une part par deux parties mâles (16A) réalisées aux deux extrémités libres de l'élément de transformation (12A), et d'autre part par deux parties femelles (15A) réalisées sur les tenons (7A), l'un ou l'autre de ces éléments étant élastiquement déformable.

## Description

La présente invention concerne d'une manière générale des lunettes constituées d'une façade optique ou solaire reliée à deux branches latérales de soutien, par l'intermédiaire de deux tenons correspondants.

C'est ainsi qu'il pourra s'agir, par exemple, de lunettes dont les branches sont reliées, par l'intermédiaire de charnières, à des tenons correspondants, associés soit à un élément de façade, qui pourra être total ou partiel, pour une monture dite « cerclée », soit aux verres directement pour une monture dite « verres percés ».

Il pourra également s'agir de lunettes dont les branches sont suffisamment souples pour être reliées à une monture sans articulation, c'est-à-dire par simple pliage des branches, déformables élastiquement.

Egalement, les lunettes pourront comporter deux verres optiques ou solaires, ou une façade réalisée d'un seul tenant, notamment pour des lunettes solaires.

Autrement dit, l'invention est applicable à tous types de lunettes optiques ou solaires.

Dans tous ces cas, il est connu de transformer l'aspect des lunettes en rapportant sur celles-ci, de manière amovible, un élément de transformation, de manière à modifier leur apparence par rapport à la monture d'origine.

C'est ainsi qu'ont été proposés différents moyens de fixation, disposés d'une part sur les lunettes et d'autre part sur l'élément de transformation amovible, agissant de manière complémentaire.

Des moyens de fixation complémentaires ont déjà été proposés dans l'art antérieur et sont constitués de crochets ou clips, mais ces systèmes sont d'un prix de revient élevé et leur mise en oeuvre par un utilisateur non expérimenté peut parfois provoquer des désagréments pour celui-ci.

De plus, ces crochets ou clips doivent coopérer avec des organes complémentaires, généralement des pions, et une grande précision dans leur réalisation et leur positionnement est nécessaire. Les tolérances de fabrication ou de montage doivent donc être très faibles.

De plus, pour des raisons esthétiques, il est préférable de placer les pions de fixation à l'arrière des lunettes, mais cela a pour conséquence de laisser découvertes des portions de surface situées à l'avant, non couvertes par l'élément de transformation, ce qui est jugé insuffisant.

Parfois, un des points de fixation se trouve sur le nez. L'élément de transformation est alors en deux parties et ne couvre pas le nez, ce qui est également insuffisant.

Le but de la présente invention est de proposer un élément de transformation de lunettes d'un prix de revient faible, en permettant la pose et le retrait faciles de l'élément de transformation, tout en remédiant aux inconvénients précités.

A cet effet, l'invention concerne des lunettes constituées d'une façade optique ou solaire reliée à deux branches latérales de soutien, par l'intermédiaire de deux tenons correspondants, lunettes sur lesquelles est susceptible d'être rapporté, de manière amovible, au moins un élément de transformation par l'intermédiaire de moyens de fixation complémentaires, caractérisées en ce que ces moyens sont constitués d'une part par deux parties mâles réalisées aux deux extrémités libres de l'élément de transformation, dans le sens longitudinal de celui-ci, et d'autre part par deux parties femelles d'extrémité réalisées sur les tenons, à une distance l'une de l'autre sensiblement égale à celle des parties mâles, suivant le même sens longitudinal, de manière à permettre le montage de l'élément de transformation sur les lunettes, par déformation élastique de celui-ci, en le galbant par une pression manuelle, afin de réduire la distance des parties mâles et permettre leur présentation devant les parties femelles des tenons, puis leur introduction dans celles-ci, par relâchement de ladite pression manuelle, ou inversement.

Bien entendu, l'aspect des lunettes pourra être modifié à l'aide d'un ou plusieurs éléments de transformation.

Comme nous le verrons ci-après, il est bien entendu possible d'intervertir les positions des parties mâles et des parties femelles.

La présente invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée en référence aux dessins annexés sur lesquels :
La figure 1 est une vue de dessus d'une monture de lunettes transformable, selon un premier mode de réalisation de l'invention, pour une monture dite « cerclée », à titre d'exemple illustratif.
La figure 2 est une vue de face de la monture selon la figure 1.
La figure 2a représente une vue latérale d'un tenon.
La figure 2b représente un agrandissement de la figure 2a.
La figure 3 est une vue de face d'un élément de transformation constituant un décor inférieur amovible.
La figure 4 est une vue d'un élément de transformation selon la figure 3, associé à une monture selon la figure 2.
La figure 5 est une vue de face d'un élément de transformation constituant un décor supérieur amovible.
La figure 6 est une vue d'un élément de transformation selon la figure 5, associé à une monture selon la figure 2.
La figure 7 est une vue de face d'un élément de transformation constituant un décor total amovible.
La figure 8 est une vue d'un élément de transformation selon la figure 7, associé à une monture selon la figure 2.
La figure 9 représente, selon un second mode de réalisation de l'invention, en vue de dessus, une monture de lunettes transformable, à titre d'exemple une monture dite « cerclée ».
La figure 10 est une vue de face d'une monture selon la figure 9.
La figure 11 est une vue de dessus d'un élément de décor, selon le second mode de réalisation.
La figure 12 est une vue de face d'un élément de décor inférieur amovible selon la figure 11.
La figure 13 est une vue de face d'un élément de décor inférieur selon la figure 12, associé à une monture selon la figure 10.
La figure 14 est une vue de face d'un élément de transformation constituant un décor supérieur amovible.
La figure 15 est une vue de face d'un élément de transformation amovible selon la figure 14, associé à une monture selon la figure 10.
La figure 16 est une vue de face d'un élément de transformation constituant un décor total amovible.
La figure 17 est une vue de face d'un élément de transformation amovible selon la figure 16, associé à une monture selon la figure 10.

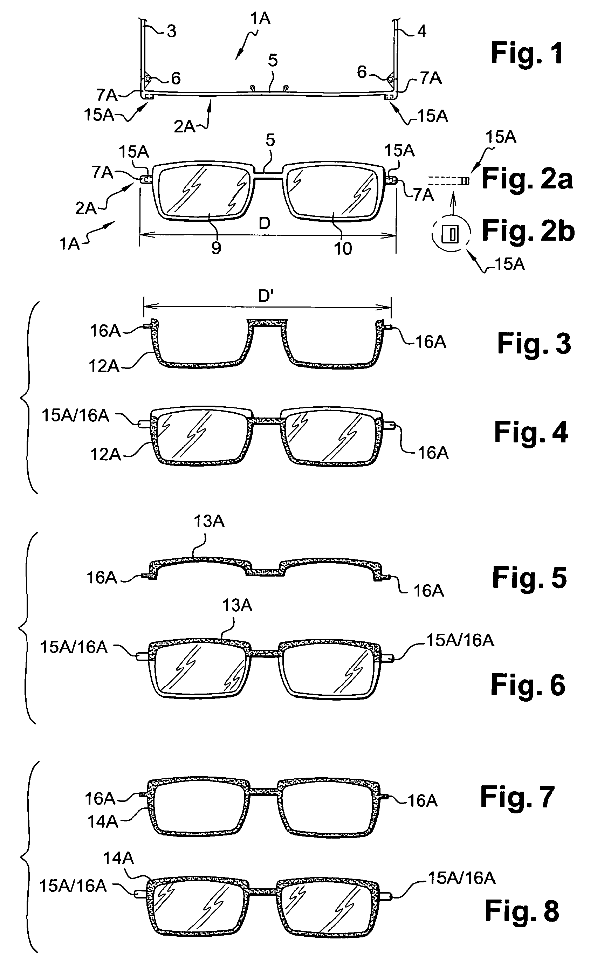

A titre d'exemple illustratif et nullement limitatif, les lunettes 1A, 1B désignées globalement sur l'ensemble des figures 1 à 17 sont constituées par deux verres optiques ou solaires 9, 10, soutenus par une monture 2A, 2B comprenant au moins deux branches latérales 3, 4 et un nez central 5.

Toujours selon le présent exemple, lesdites branches latérales 3, 4 sont reliées par l'intermédiaire de charnières 6, à des tenons correspondants 7A, 7B.

Bien entendu, il pourra s'agir de tous types de lunettes, tels qu'évoqués dans le préambule.

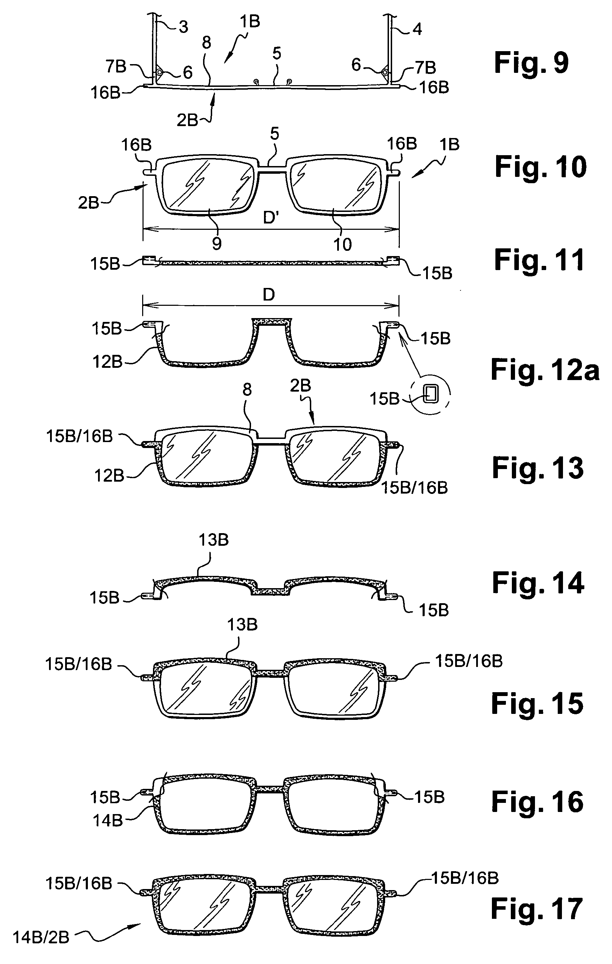

Toujours d'une manière générale, qu'il s'agisse d'une monture 2A selon les exemples des figures 1 à 8, ou 2B selon les exemples des figures 9 à 17, celles-ci sont susceptibles de recevoir, de manière amovible, un élément de transformation 12A, 13A, 14A - 12B, 13B, 14B de l'aspect de la monture, et ceci par l'intermédiaire de moyens de fixation complémentaires 15A, 15B - 16A, 16B disposés d'une part sur la monture 2A, 2B, et d'autre part sur l'élément de transformation amovible 12A, 13A, 14A - 12B, 13B, 14B.

Selon le premier exemple de réalisation de l'invention représenté sur les figures 1 à 8, les tenons 7A sont associés à une monture 2A dite « cerclée ».

Selon ce premier exemple de réalisation de l'invention, les moyens de fixation complémentaires de l'élément de transformation amovible 12A, 13A, 14A sur une monture 2A sont constitués d'une part par deux parties mâles 16A réalisées aux deux extrémités libres de l'élément de transformation 12A, 13A, 14A, dans le sens longitudinal L, L' de celui-ci, et d'autre part par deux parties femelles 15A réalisées sur les tenons 7A constituant les extrémités de la monture 2A, à une distance D l'une de l'autre sensiblement égale à celle D' des parties mâles, suivant le même sens longitudinal, de manière à permettre le montage de l'élément de transformation 12A, 13A, 14A sur les lunettes 1A, plus précisément ici la monture 2A, par déformation élastique de celui-ci, en le galbant par une pression manuelle.

Ceci permet de réduire la distance D' des parties mâles 16A et permettre leur présentation devant les parties femelles 15A des tenons 7A de la monture 2A, puis leur introduction dans celles-ci, par relâchement de ladite pression manuelle.

Il est à noter que l'inverse est également possible.

Préférentiellement, comme représenté sur l'ensemble des figures 1 à 8, l'ensemble des parties femelles 15A sont réalisées sur les tenons 7A, sur leur face dirigée vers l'extérieur de la monture 2A, pour un montage externe de l'élément de transformation 12A, 13A, 14A.

Mais bien entendu, de manière non représentée, les parties femelles 15A pourraient être réalisées sur les tenons 7A, sur leur face dirigée vers l'intérieur de la monture 2A, pour un montage interne de l'élément de transformation 12A, 13A, 14A.

Indifféremment, les parties femelles 15A pourront être constituées par des logements borgnes ou par des logements débouchants.

Préférentiellement, les parties mâles 16A sont constituées par des languettes situées dans le même plan que l'élément de transformation 12A, 13A, 14A, et obtenues de matière avec celui-ci au cours d'une même opération de découpe d'une matière découpable telle qu'un flan métallique ou autre.

L'élément de transformation peut aussi être obtenu par assemblage, par soudage, par collage, etc...., de plusieurs parties.

Egalement, les parties mâles 16A pourraient être constituées par des languettes situées dans le même plan que l'élément de transformation 12A, 13A, 14A, et obtenues de matière avec celui-ci au cours d'une même opération de moulage d'une matière moulable telle que plastique ou autre.

Selon le second exemple de réalisation représenté sur les figures 9 à 17, les tenons 7B sont associés à une monture 2B dite « cerclée », comme pour les exemples précédents.

Ce second mode de réalisation de l'invention, représenté sur les figures 9 à 17, constitue en fait un inverse du précédent. Il en diffère essentiellement en ce que les moyens de fixation complémentaires de l'élément de transformation 12B, 13B, 14B sont constitués d'une part par deux parties mâles d'extrémité 16B réalisées dans le prolongement des tenons 7B vers l'extérieur, dans le sens longitudinal L, L' des lunettes, et d'autre part par deux parties femelles 15B réalisées aux deux extrémités libres de l'élément de transformation 12B, 13B, 14B, à une distance D l'une de l'autre, sensiblement égale à celle D' des parties mâles 16B, suivant le même sens longitudinal.

De cette manière, on permet le montage de l'élément de transformation sur les lunettes par déformation élastique de celui-ci, en exerçant une traction manuelle dans le sens longitudinal, afin d'augmenter la distance D et permettre, dans un premier temps, la présentation d'une des parties femelles 15B de l'élément de transformation dans une des parties mâles correspondantes 16B, puis l'introduction de l'autre partie femelle opposée de l'élément de transformation dans l'autre partie mâle correspondante 16B, et l'introduction de cette dernière par relâchement de ladite traction manuelle, ou inversement.

Préférentiellement, les parties mâles 16B sont constituées par des languettes réalisées dans le prolongement des tenons 7B vers l'extérieur.

Comme le montrent bien les figures 9 et 10, les languettes 16B situées dans le prolongement externe des tenons 7B sont réalisées aux extrémités latérales de l'élément de façade 8, d'une monture 2B.

Indifféremment, les parties femelles 15B de l'élément de transformation 12B, 13B, 14B sont constituées par des logements borgnes ou par des logements débouchants.

Les logements 15B sont réalisés aux extrémités latérales de l'élément de transformation 12B, 13B, 14B par découpe d'une matière découpable, telle qu'un flan métallique ou autre, puis roulage desdites extrémités.

De manière différente, les logements 15B sont obtenus avec l'élément de transformation 12B, 13B, 14B au cours d'une même opération de moulage d'une matière moulable, plastique ou autre.

## Revendications

1. Lunettes (1A) constituées d'une façade optique ou solaire (9, 10) reliée à deux branches latérales de soutien (3, 4), par l'intermédiaire de deux tenons correspondants (7A), lunettes sur lesquelles est susceptible d'être rapporté, de manière amovible, au moins un élément de transformation (12A, 13A, 14A) par l'intermédiaire de moyens de fixation complémentaires (15A, 16A), **caractérisées en ce que** ces moyens sont constitués d'une part par deux parties mâles (16A) réalisées aux deux extrémités libres de l'élément de transformation (12A, 13A, 14A), dans le sens longitudinal (L, L') de celui-ci, et d'autre part par deux parties femelles d'extrémité (15A) réalisées sur les tenons (7A), à une distance (D) l'une de l'autre sensiblement égale à celle (D') des parties mâles, suivant le même sens longitudinal, de manière à permettre le montage de l'élément de transformation (12A, 13A, 14A) sur les lunettes (1A), par déformation élastique de celui-ci, en le galbant par une pression manuelle, afin de réduire la distance (D') des parties mâles (16A) et permettre leur présentation devant les parties femelles (15A) des tenons (7A), puis leur introduction dans celles-ci, par relâchement de ladite pression manuelle, ou inversement.

2. Lunettes selon la revendication 1, **caractérisées en ce que** les parties femelles (15A) sont réalisées sur les tenons (7A), sur leur face dirigée vers l'extérieur des lunettes, pour un montage externe de l'élément de transformation (12A, 13A, 14A).

3. Lunettes selon la revendication 1, **caractérisées en ce que** les parties femelles (15A) sont réalisées sur les tenons (7A), sur leur face dirigée vers l'intérieur des lunettes, pour un montage interne de l'élément de transformation (12A, 13A, 14A).

4. Lunettes selon l'une des revendications 2 ou 3, **caractérisées en ce que** les parties femelles (15A) sont constituées par des logements borgnes.

5. Lunettes selon l'une des revendications 2 ou 3, **caractérisées en ce que** les parties femelles (15A) sont constituées par des logements débouchants.

6. Lunettes selon l'une des revendications précédentes, **caractérisées en ce que** les parties mâles (16A) sont constituées par des languettes situées dans le même plan que l'élément de transformation (12A, 13A, 14A), et obtenues de matière avec celui-ci au cours d'une même opération de découpe d'une matière découpable.

7. Lunettes selon l'une des revendications 1 à 6, **caractérisées en ce que** les parties mâles (16A) sont constituées par des languettes situées dans le même plan que l'élément de transformation (12A, 13A, 14A), et obtenues de matière avec celui-ci au cours d'une même opération de moulage d'une matière moulable.

8. Lunettes (1B) constituées d'une façade optique ou solaire (9, 10) reliée à deux branches latérales de soutien (3, 4), par l'intermédiaire de deux tenons correspondants (7B), lunettes sur lesquelles est susceptible d'être rapporté, de manière amovible, au moins un élément de transformation (12B, 13B, 14B) par l'intermédiaire de moyens de fixation complémentaires (15B, 16B), **caractérisées en ce que** ces moyens sont constitués d'une part par deux parties mâles d'extrémité (16B) réalisées dans le prolongement des tenons (7B) vers l'extérieur, dans le sens longitudinal (L, L') des lunettes, et d'autre part par deux parties femelles (15B) formant des logements réalisés aux deux extrémités libres de l'élément de transformation (12B, 13B, 14B), à une distance (D) l'une de l'autre, sensiblement égale à celle (D') des parties mâles (16B), suivant le même sens longitudinal, de manière à permettre le montage de l'élément de transformation sur les lunettes par déformation élastique de celui-ci, en exerçant une traction manuelle dans le sens longitudinal, afin d'augmenter la distance (D) et permettre, dans un premier temps, la présentation d'un des logements (15B) de l'élément de transformation dans une des parties mâles correspondantes (16B), puis l'introduction de l'autre logement (15B) opposé de l'élément de transformation dans l'autre partie mâle correspondante (16B), et l'introduction de cette dernière par relâchement de ladite traction manuelle, ou inversement.

9. Lunettes selon la revendication 8, **caractérisées en ce que** les parties mâles (16B) sont constituées par des languettes réalisées dans le prolongement des tenons (7B) vers l'extérieur.

10. Lunettes selon la revendication 9, **caractérisées en ce que** les languettes (16B) situées dans le prolongement externe des tenons (7B) sont réalisées aux extrémités latérales d'un élément de façade (8) d'une monture (2B).

11. Lunettes selon l'une des revendications 8 à 10, **caractérisées en ce que** les parties femelles (15B) de l'élément de transformation (12B, 13B, 14B) sont constituées par des logements borgnes.

12. Lunettes selon l'une des revendications 8 à 10, **caractérisées en ce que** les parties femelles (15B) de l'élément de transformation (12B, 13B, 14B) sont constituées par des logements débouchants.

13. Lunettes selon l'une des revendications 11 ou 12, **caractérisées en ce** les logements (15B) sont réalisés aux extrémités latérales de l'élément de transformation (12B, 13B, 14B) par découpe d'une matière découpable, puis roulage desdites extrémités.

14. Lunettes selon l'une des revendications 11 ou 12, **caractérisées en ce** les logements (15B) sont obtenus avec l'élément de transformation (12B, 13B, 14B) au cours d'une même opération de moulage d'une matière moulable.
